# FASCICULE DE BREVET EUROPEEN

(11) **EP 2 639 051 B1**
(45) Date de publication et mention de la délivrance du brevet: **15.02.2017**
(21) Numéro de dépôt: 13305247.2
(22) Date de dépôt: 05.03.2013
(51) Int. Cl.: B29C 70/44, B29C 70/56

(54) **Procede d'obtention d'une piece en materiau composite incorporant une phase de mise en tension des filaments et outillage pour sa mise en oeuvre**
Herstellungsverfahren eines Werkstücks aus Verbundmaterial, das eine Spannungsphase der Fäden beinhaltet, und Werkzeug zu seiner Umsetzung
Method for obtaining a part made of a composite material including a phase of tensioning filaments, and tool for implementing same

(30) Priorité: 12.03.2012 FR 1252173
(43) Date de publication de la demande: 18.09.2013
(73) Titulaire: Airbus Opérations SAS, 31060 Toulouse (FR)
(72) Inventeur: De Mattia, Denis, 44115 Basse Goulaine (FR)
(74) Mandataire: Fantin, Laurent

(56) Documents cités:
- EP-A1- 1 775 109
- WO-A2-2008/070621
- DE-A1-102007 058 727
- FR-A1- 2 689 809
- GB-A- 2 243 104

## Description

La présente invention se rapporte à un procédé d'obtention d'une pièce en matériau composite incorporant une phase de mise en tension des filaments ainsi qu'à un outillage pour sa mise en oeuvre.

Une pièce en matériau composite est constituée de fibres noyées dans une matrice de résine.

L'invention se rapporte plus particulièrement à l'obtention d'une pièce en matériau composite à partir d'une préforme de fibres pré-imprégnées soumise à un cycle de polymérisation lors duquel la préforme de fibres est comprimée et subit une élévation de température.

Pour certaines pièces en matériau composite, la préforme est obtenue en empilant sur un outillage de forme convexe des couches de fibres pré-imprégnées les unes sur les autres, les fibres devant être déposées selon des orientations prédéterminées en fonction des caractéristiques mécaniques recherchées. Selon un mode opératoire, chaque couche est constituée de bandes de fibres juxtaposées, les fibres étant orientées selon une direction pour chaque bande. Généralement, les fibres sont constituées de plusieurs filaments et l'épaisseur de la bande peut varier en fonction du grammage, plus particulièrement du nombre de filaments par fibre.

Le document EP 1 775 109 A1 divulgue un tel procédé pour un outillage de forme concave.

Lorsque la surface de dépose des bandes est développable et/ou présente des rayons de courbure non prononcés, la bande est en contact avec la surface de dépose sur toute sa largeur et sur toute sa longueur. Dans ce cas, les filaments de la bande ont quasiment tous la même tension.

Il en va tout autrement lorsque la surface de dépose n'est pas développable. C'est notamment le cas des parois en matériau composite présentant une double courbure comme la pointe avant du fuselage d'un aéronef ou des pièces présentant des épaisseurs variables comme un longeron d'une voilure d'aéronef qui a une section variable sur sa longueur.

Dans le cas d'une surface non développable, il existe une différence de longueur entre une première trajectoire imposée par la surface aux filaments situés au niveau d'un des bords de la bande et une seconde trajectoire imposée par la surface aux filaments situés au niveau de l'autre bord de la bande. Dans la mesure où les filaments de la bande sont quasi-inextensibles, les filaments disposés proches d'un des bords vont être tendus alors que les filaments disposés au niveau de l'autre bord vont être comprimés et vont donc onduler.

Il existe également une hétérogénéité des tensions des filaments dans le cas d'une dépose de bandes avec un fort grammage et donc une épaisseur importante, sur un faible rayon de courbure de l'ordre de 10 à 30 mm par exemple. En effet, les filaments disposés au niveau du rayon externe sont tendus alors que les filaments disposés au niveau du rayon interne sont comprimés et tendent à onduler.

Cette hétérogénéité des tensions des filaments emprisonnés dans la matrice de résine après polymérisation va conduire à une réduction des caractéristiques mécaniques de la pièce réalisée. En effet, le chargement mécanique progressif d'une telle pièce conduit à exercer un effort de traction seulement sur les filaments tendus dans un premier temps, puis en augmentant la charge sur les filaments un peu moins tendus et ainsi de suite jusqu'aux filaments les moins tendus, les plus tendus atteignant eux leurs limites de résistance à la traction et étant prêts à se rompre.

Il existe des solutions pour limiter les risques d'ondulation mais aucune n'est pleinement satisfaisante.

Une première solution consiste à déposer avec une grande maitrise les bandes en évitant tous jeux et recouvrements entre les bandes. En effet, les filaments comprimés ont tendance à se détendre dans les zones de recouvrement et de jeux en y créant des ondulations. En l'absence de telles zones, les filaments même comprimés tendent à conserver leurs positions. Même si cette solution permet de limiter les risques d'ondulation, elle ne solutionne pas le problème d'hétérogénéité des tensions des filaments et conduit à une baisse significative de la productivité.

Dans le cas d'une surface non développable, une autre solution consiste à déroger à la règle d'orientation des fibres imposée par le bureau d'études en favorisant des trajectoires de dépose plus proches des trajectoires géodésiques imposées par la surface de dépose. Cette solution conduit à réduire les caractéristiques mécaniques de la pièce. De plus, elle ne solutionne pas les risques d'ondulation dans le cas d'une dépose au niveau d'un rayon de courbure fortement prononcé.

Dans le cas d'une surface non développable, une autre solution consiste à réduire la largeur de la bande de manière à limiter la différence de longueur entre la trajectoire suivie par les filaments disposés au niveau d'un premier bord de la bande et la trajectoire suivie par les filaments disposés au niveau de l'autre bord de la bande. Cette solution n'est pas satisfaisante car elle conduit à augmenter le nombre de bandes à déposer et donc à baisser significativement la productivité. Selon une autre limite, elle ne solutionne pas les problèmes liés à la dépose d'une bande au niveau d'un rayon de courbure fortement prononcé.

Dans le cas d'un rayon de courbure fortement prononcé, une solution consiste à limiter l'épaisseur de la bande (faible grammage). Cette solution n'est pas satisfaisante car elle conduit à augmenter le nombre de couches à déposer et donc à abaisser significativement la productivité. De plus, elle ne solutionne pas les problèmes liés à la dépose d'une bande sur une surface non développable. Par conséquent, les procédés de l'art antérieur ne donnent pas des résultats optimaux concernant la qualité et la productivité.

Aussi, la présente invention vise à remédier aux inconvénients de l'art antérieur. A cet effet, l'invention a pour objet un procédé d'obtention d'une pièce en matériau composite à partir d'une préforme de couches de fibres pré-imprégnées de résine empilées les unes sur les autres sur un outillage, selon la revendication 1.

La présente invention a également pour objet un outillage selon la revendication 6.

La phase de mise en tension des filaments permet d'équilibrer les tensions des filaments et de réduire les risques d'ondulation.

D'autres caractéristiques et avantages ressortiront de la description qui va suivre de l'invention, description donnée à titre d'exemple uniquement, en regard des dessins annexés sur lesquels :
- La figure 1 est une vue en perspective d'un exemple de pièce réalisée selon le procédé de l'invention,
- La figure 2 est une section transversale de la pièce illustrée sur la figure 1,
- La figure 3 est une coupe illustrant un premier outillage permettant de mettre en oeuvre le procédé selon l'invention, et
- La figure 4 est une coupe illustrant un autre outillage permettant de mettre en oeuvre le procédé selon l'invention.

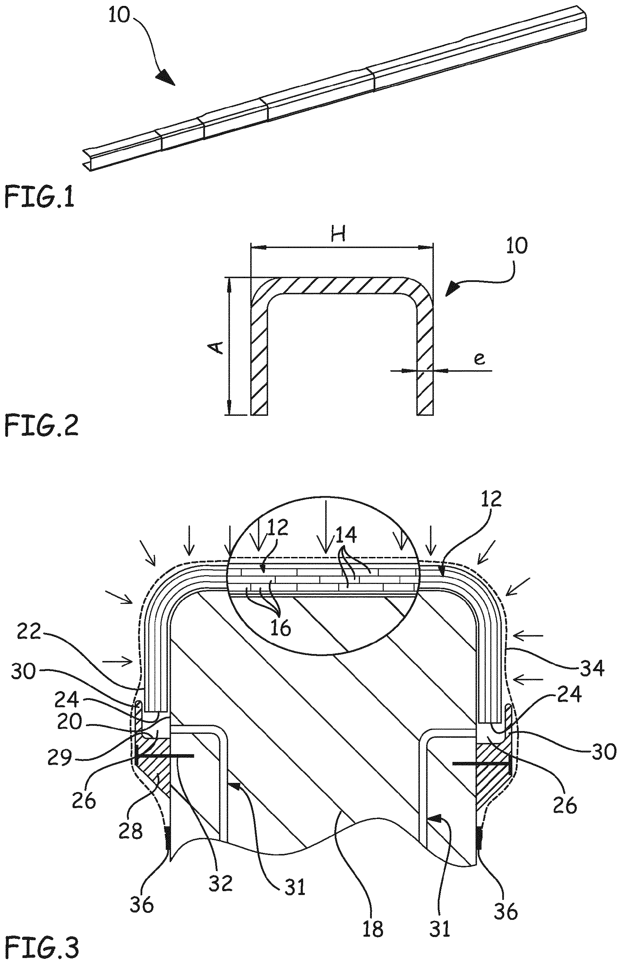

Sur les figures 1 et 2, on a représenté une pièce 10 en matériau composite présentant une section transversale en U. A titre d'exemple, une telle pièce peut être utilisée comme longeron d'une voilure d'aéronef. L'épaisseur e d'un longeron peut varier de 7 à 25 mm, sa hauteur H peut varier de 200 à 1500 mm, la largeur A des ailes peut varier de 200 à 400 mm et sa longueur peut atteindre 10 m.

Bien entendu, l'invention n'est pas limitée à cette application. Elle peut être utilisée pour la réalisation de différentes pièces en matériau composite. Elle est plus particulièrement adaptée lorsque la pièce présente une surface non développable et/ou un rayon de courbure fortement prononcé.

La pièce 10 est obtenue à partir d'une préforme 12 de fibres pré-imprégnées soumise à un cycle de polymérisation. Une fois finie, la pièce 10 comprend des fibres de renfort noyées dans une matrice en résine.

Généralement, les fibres sont constituées chacune d'une pluralité de filaments. Les matériaux des filaments et la résine peuvent varier en fonction des applications.

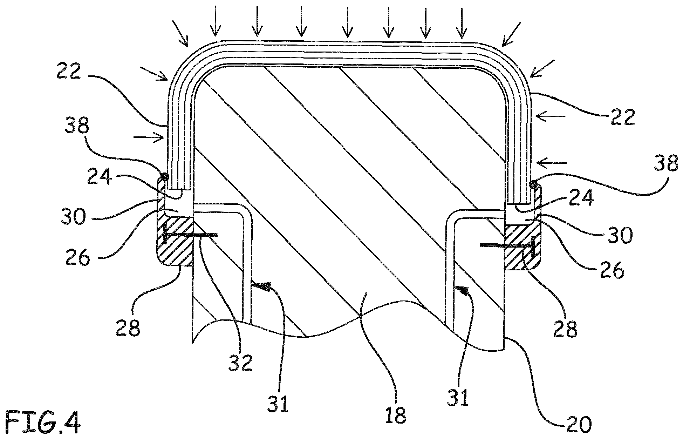

Selon un mode de réalisation, comme illustré sur les figures 3 et 4, la préforme 12 de fibres pré-imprégnées est obtenue en empilant des couches de fibres 14, les différentes couches comprenant des bandes 16 de fibres juxtaposées les unes aux autres.

Pour chaque bande, les fibres sont orientées selon une unique direction parallèle à la direction longitudinale de la bande (plus grande dimension de la bande).

Chaque bande se caractérise par une largeur et par une épaisseur qui correspond également au grammage de la bande. A titre d'exemple, la bande peut avoir une largeur de l'ordre de 5 à 10 mm et une épaisseur de l'ordre de 0,3 mm.

La première couche de fibres est déposée sur un outillage 18 offrant une surface de dépose 20 convexe complémentaire d'une des surfaces de la pièce à réaliser.

Lorsque toutes les couches de fibres sont déposées les unes sur les autres, la préforme 12 est constituée.

Quel que soit le mode de dépose des couches de fibres, la préforme 12 est délimitée par la surface inférieure de la première couche (plaquée contre la surface de dépose 20), par la surface supérieure 22 de la dernière couche déposée et par un chant 24 périphérique qui s'étend sur tout le pourtour de la préforme 12.

Selon l'invention, la majorité des filaments formant les fibres comprennent une première extrémité disposée au niveau d'une première zone du chant 24 et une seconde extrémité disposée au niveau d'une seconde zone du chant 24 distante de la première zone.

Selon l'invention, le procédé d'obtention d'une pièce en matériau composite comprend une phase de mise en tension des filaments de la préforme non tendus initialement lors de la phase de dépose des couches de fibres, préalablement à la phase de polymérisation. Cette phase permet d'équilibrer les tensions des filaments et de réduire les risques d'ondulation. Pour générer la tension des filaments, un effort de traction est appliqué à chaque extrémité des filaments.

Cet effort de traction découle d'un phénomène d'aspiration au niveau d'au moins une partie du chant 24 de la préforme. De préférence, ce phénomène d'aspiration est généré sur toute la longueur du chant 24 de la préforme et sur toute sa hauteur.

Préalablement ou de manière concomitante à ce phénomène d'aspiration, la préforme 12 est chauffée de manière à ce que la résine imprégnant les fibres ait une viscosité adaptée permettant un glissement axial et relatif des filaments. La préforme ne doit pas subir une élévation de température trop importante afin de ne pas générer un essorage des fibres en raison d'une résine trop fluide.

De préférence, la viscosité de la résine doit être comprise entre 1000 et 50 Pa.s, ce qui correspond à une élévation de température entre 60 et 100 °C.

Pour obtenir la tension des filaments, on génère dans une cavité périphérique 26 jouxtant le chant 24 une pression inférieure à la pression externe de la préforme 12. A titre indicatif, cette cavité périphérique 26 a une section sensiblement carrée, un côté étant sensiblement égal à la hauteur du chant 24 de la pièce.

Avantageusement, on génère dans la cavité périphérique 26 une pression inférieure à 0.05 MPa absolu (0.5 bar).

Selon l'invention, la cavité périphérique 26 est délimitée par le chant 24 de la préforme, la surface de dépose 20 de l'outillage et une pièce périphérique 28 solidarisée à l'outillage 18 après la dépose de la dernière couche, comprenant une face 29 distante du chant 24 et une aile 30 susceptible de recouvrir le bord périphérique de la surface supérieure 22 de la dernière couche de fibres déposée.

En complément, l'outillage comprend des moyens 31 d'extraction d'un gaz qui débouchent dans la cavité périphérique 26 pour aspirer le gaz dans ladite cavité périphérique 26. Les moyens 31 d'extraction d'un gaz comprennent au moins une canalisation qui débouche au niveau de la surface de dépose 20, entre le chant 24 et la face 29 de la pièce périphérique qui sont sensiblement parallèles entre elles et perpendiculaires à la surface de dépose 20.

La pièce périphérique 28 est réalisée d'un seul tenant ou en plusieurs tronçons mis bout à bout. Elle est reliée à l'outillage par des moyens de liaison démontable 32 comme par exemple une pluralité de vis.

Des moyens d'étanchéité sont prévus pour assurer l'étanchéité de la cavité périphérique 26.

Selon un premier mode de réalisation illustré sur la figure 3, la préforme 12 et la pièce périphérique 28 sont recouvertes d'une vessie 34 qui est reliée à l'extérieur de la pièce périphérique 28 à l'outillage par des moyens d'étanchéité 36. On exerce alors à l'extérieur de la vessie 34 une pression externe de l'ordre de 0.7 Mpa par exemple dans un autoclave, de manière à plaquer la vessie sur la préforme et la pièce périphérique.

Selon un autre mode de réalisation illustré sur la figure 4, la vessie 34 peut être remplacée par un joint d'étanchéité 38 intercalé entre l'aile 30 et le bord périphérique de la surface supérieure 22. Des moyens d'étanchéité peuvent également être prévus entre la pièce périphérique 28 et la surface de dépose 20. La durée de la phase de mise en tension des filaments est directement liée à la viscosité de la résine et de la sur-longueur que l'on estime nécessaire d'absorber pour supprimer toute compression des filaments.

Généralement, on estime que la sur-longueur des filaments est de l'ordre de 1 à 3 mm.

En partant de la formule de la viscosité, on obtient V=(k.P.e²)/(2.n.H) avec V la vitesse de déplacement du filament en mm/s, k le coefficient de défoisonnement, P la pression dans la cavité périphérique en Pa, e l'épaisseur d'une couche en mm, n la viscosité en Pa.s et H la distance en mm entre le chant et la zone au niveau de laquelle la fibre présente la sur-longueur.

A titre d'exemple, à 85°, la résine a une viscosité n égale 100 Pa.s. Si on considère que la sur-longueur est distante du chant d'une distance H égale à 400 mm, que l'épaisseur de la couche est de 0,3mm, que k=0,05 et que la pression est de 7.10⁵ Pa, on obtient alors une vitesse de 0,039 mm/s.

Ainsi, pour absorber une sur-longueur de 1 mm, la durée de la phase de mise en tension des filaments est de l'ordre de 25 s.

Pour une pression de l'ordre de 1.10⁵ Pa, on peut absorber une sur-longueur de 1 mm en 3 min.

## Revendications

1. Procédé d'obtention d'une pièce en matériau composite à partir d'une préforme (12) de couches de fibres pré-imprégnées de résine empilées les unes sur les autres sur un outillage (18), chaque fibre comportant une pluralité de filaments, ladite préforme (12) étant délimitée par une surface inférieure, par une surface supérieure (22) et par un chant (24) périphérique, ladite préforme (12) étant soumise à une phase de polymérisation, **caractérisé en ce qu'**il consiste à rapporter sur l'outillage (18) de forme convexe, après la dépose de la dernière couche déposée, une pièce périphérique (28) comprenant une face (29) distante du chant (24) et une aile (30) apte à recouvrir le bord périphérique de la surface supérieure (22), de manière à générer en périphérie de la préforme une cavité périphérique (26) jouxtant le chant (24) de la préforme, les filaments des fibres comprenant une première extrémité disposée au niveau d'une première zone du chant (24) et une seconde extrémité disposée au niveau d'une seconde zone du chant (24) distante de la première zone et, préalablement à la phase de polymérisation, à aspirer, grâce à des moyens d'aspiration situés au niveau de la première et de la deuxième zone de chant, le gaz présent dans ladite cavité périphérique (26) de manière à mettre en tension des filaments de la préforme en exerçant un effort de traction aux extrémités desdits filaments.

2. Procédé selon la revendication 1, **caractérisé en ce qu'**il consiste à intercaler un joint d'étanchéité (38) entre l'aile (30) et le bord périphérique de la surface supérieure (22).

3. Procédé selon la revendication 1 ou 2, **caractérisé en ce que** la viscosité de la résine est comprise entre 1000 et 50 Pa.s lors de la phase de la mise en tension des filaments.

4. Procédé selon l'une des revendications 1 à 3, **caractérisé en ce qu'**il consiste à générer au niveau du chant (24) de la préforme une pression inférieure 0.05 Mpa (0.5 bar) absolu.

5. Procédé selon l'une des revendications 1 à 4, **caractérisé en ce qu'**il consiste à recouvrir la préforme (12) et la pièce périphérique (28) d'une vessie (34) qui est reliée à l'extérieur de la pièce périphérique (28) à l'outillage par des moyens d'étanchéité (36) et à exercer une pression à l'extérieur de la vessie (34).

6. Outillage pour la mise en oeuvre du procédé selon l'une quelconque des revendications précédentes, **caractérisé en ce qu'**il comprend :
- une surface de dépose (20) de forme convexe sur laquelle sont rapportées des couches de fibres de manière à former une préforme (12) délimitée par une surface inférieure, par une surface supérieure (22) et par un chant (24) périphérique, les filaments des fibres comprenant une première extrémité disposée au niveau d'une première zone du chant (24) et une seconde extrémité disposée au niveau d'une seconde zone du chant (24) distante de la première zone,
- une pièce périphérique (28) reliée à l'outillage par des moyens de liaison démontable (32), ladite pièce périphérique (28) comprenant une face (29) distante du chant (24) et une aile (30) apte à recouvrir le bord périphérique de la surface supérieure (22), et
- des moyens pour extraire un gaz débouchant dans une cavité périphérique (26) délimiter par le chant (24) de la préforme, la surface de dépose (20) et la pièce périphérique (28), lesdits moyens étant situés au niveau de la première et de la deuxième zone de chant.

7. Outillage selon la revendication 6, **caractérisé en ce qu'**il comprend une vessie (34) qui recouvre la préforme (12) et la pièce périphérique (28) et qui est reliée à l'extérieur de la pièce périphérique (28) à l'outillage par des moyens d'étanchéité (36).

8. Outillage selon la revendication 6, **caractérisé en ce qu'**il comprend un joint d'étanchéité (38) intercalé entre l'aile (30) et le bord périphérique de la surface supérieure (22).

## Patentansprüche

1. Verfahren zur Herstellung eines Werkstücks aus Verbundmaterial, ausgehend von einer Vorform (12) mit Schichten aus imprägnierten Fasern, die übereinander auf einem Werkzeug (18) gestapelt sind, wobei jede Faser eine Vielzahl von Filamenten aufweist und wobei die Vorform (12) durch eine untere Oberfläche, eine obere Oberfläche (22) und eine umlaufende Schmalseite (24) begrenzt ist und wobei die Vorform (12) einem Polymerisationsvorgang unterzogen wird, **dadurch gekennzeichnet, dass** dieses darin besteht, an dem konvex ausgebildeten Werkzeug (18) nach der Ablage der letzten aufgebrachten Schicht ein umlaufendes Teil (28) anzubringen, das eine von der Schmalseite (24) entfernte Stirnfläche (29) und ein Seitenflügel (30) aufweist, der dazu geeignet ist, den umlaufenden Rand der oberen Oberfläche (22) abzudecken, um auf diese Weise im Randbereich der Vorform einen umlaufenden Hohlraum (26) zu bilden, der an die Schmalseite (24) der Vorform angrenzt, wobei die Filamente der Fasern ein erstes Ende aufweisen, das im Bereich einer ersten Zone der Schmalseite (24) angeordnet sind, und ein zweites Ende, das im Bereich einer zweiten Zone der Schmalseite (24) im Abstand zur ersten Zone angeordnet ist, und vor dem Polymerisationsvorgang mittels Ansaugmitteln, die sich im Bereich der ersten und der zweiten Zone der Schmalseite befinden, das sich in dem umlaufenden Hohlraum (26) befindende Gas abzusaugen, um auf diese Weise die Filamente der Vorform zu spannen, indem eine Zugbelastung auf die Enden der Filamente ausgeübt wird.

2. Verfahren nach Anspruch 1, **dadurch gekennzeichnet, dass** dieses darin besteht, eine Dichtung (38) zwischen dem Seitenflügel (30) und dem umlaufenden Rand der oberen Oberfläche (22) einzubringen.

3. Verfahren nach Anspruch 1 oder 2, **dadurch gekennzeichnet, dass** die Viskosität des Harzes während des Vorgangs des Spannens der Filamente zwischen 1000 und 50 Pa.s liegt.

4. Verfahren nach einem der Ansprüche 1 bis 3, **dadurch gekennzeichnet, dass** dieses darin besteht, im Bereich der Schmalseiten (24) einen absoluten Druck unterhalb von 0,05 Mpa (0,5 bar) zu erzeugen.

5. Verfahren nach einem der Ansprüche 1 bis 4, **dadurch gekennzeichnet, dass** dieses darin besteht, die Vorform (12) und das umlaufende Teil (28) mit einer Hülle (34) abzudecken, die außerhalb des umlaufenden Teils (28) mit dem Werkzeug durch Dichtemittel (36) verbunden ist, und einen Druck auf das Äußere der Hülle (34) auszuüben.

6. Werkzeug zur Ausführung des Verfahrens nach einem der vorhergehenden Ansprüche, **dadurch gekennzeichnet, dass** dieses umfasst:
- eine konvex ausgebildete Ablagefläche (20), auf der Schichten von Fasern aufgebracht sind, um auf diese Weise eine Vorform (12) zu bilden, die durch eine untere Oberfläche, eine obere Oberfläche (22) und eine umlaufende Schmalseite (24) begrenzt ist, wobei die Filamente der Fasern ein erstes Ende aufweisen, das im Bereich einer ersten Zone der Schmalseite (24) angeordnet ist, und ein zweites Ende, das im Bereich einer zweiten Zone der Schmalseiten (24) im Abstand zur ersten Zone angeordnet ist,
- ein umlaufendes Teil (28), das an dem Werkzeug mithilfe von abnehmbaren Verbindungsmitteln (32) verbunden ist, wobei das umlaufende Teil (28) eine Stirnseite (29) im Abstand zur Schmalseite (24) und einen Seitenflügel (30) aufweist, der dazu eingerichtet ist, den umlaufenden Rand der oberen Oberfläche (22) abzudecken, und
- Mittel zum Entfernen eines Gases, die in einen umlaufenden Hohlraum (26) münden, der von der Schmalseite (24) der Vorform, der Ablagefläche (20) und dem umlaufenden Teil (28) begrenzt ist, wobei sich die Mittel im Bereich der ersten und zweiten Zone der Schmalseite befinden.

7. Werkzeug nach Anspruch 6, **dadurch gekennzeichnet, dass** dieses eine Hülle (34) aufweist, die die Vorform (12) und das umlaufende Teil (28) bedeckt, und die außerhalb des umlaufenden Teils (28) am Werkzeug durch Dichtemittel (36) verbunden ist.

8. Werkzeug nach Anspruch 6, **dadurch gekennzeichnet, dass** dieses eine Dichtung (38) aufweist, die zwischen dem Seitenflügel (30) und dem umlaufenden Rand der oberen Oberfläche (22) eingebracht ist.

## Claims

1. Method for obtaining a composite material part from a preform (12) of layers of fibers pre-impregnated with resin stacked on top of one another on a tool (18), each fiber comprising a plurality of filaments, the preform (12) being delimited by a lower surface, an upper surface (22) and a peripheral flank (24), the preform (12) being subjected to a polymerization phase, **characterized in that** it consists of attaching to the tool (18) with a convex shape, after the last layer has been laid, a peripheral part (28) comprising a surface (29) away from the flank (24) and a wing (30) adapted to cover a peripheral edge of the upper surface (22), so as to generate in the periphery of the preform, a peripheral cavity (26) adjacent to the flank (24) of the preform, the filaments of the fibers comprising a first end arranged in the area of a first zone of the flank (24) and a second end arranged in the area of a second zone of the flank (24) spaced from the first zone and, before the polymerization phase, withdrawing, by suction means arranged in the area of the first and second zones of the flank, gas present in the peripheral cavity (26) so as to tension filaments of the preform by exerting a traction force at ends of the filaments.

2. Method according to claim 1, **characterized in that** it consists of sandwiching a sealing joint (38) between the wing (30) and the peripheral edge of the upper surface (22).

3. Method according to claim 1 or 2, **characterized in that** the viscosity of the resin is in the range between 1000 and 50 Pa.s during the step of tensioning the filaments.

4. Method according to one of the claims 1 to 3, **characterized in that** it consists of generating, in the area of the flank (24) of the preform, a pressure of less than 0,05 Mpa (0.5 bar) absolute.

5. Method according to one of the claims 1 to 4, **characterized in that** it consists of covering the preform (12) and the peripheral part (28) with a bladder (34) which is connected outside the peripheral part (28) to the tool by sealing means (36) and exerting a pressure outside the bladder (34).

6. Tool for implementing the method according to one of the preceding claims, **characterized in that** it comprises:
- a laying surface (20) with a convex shape on which layers of fibers are deposited so as to form a preform (12) delimited by a lower surface, an upper surface (22), and a peripheral flank (24), the filaments of the fibers comprising a first end arranged in the area of a first zone of the flank (24) and a second end arranged in the area of a second zone of the flank (24) spaced from the first zone;
- a peripheral part (28) connected to the tool by connection means (32) that can be disassembled, said peripheral part (28) comprising a surface (29) spaced apart from the flank (24) and a wing (30) adapted to cover a peripheral edge of the upper surface (22); and
- suction means to extract gas opening out onto a peripheral cavity (26) delimited by the flank (24) of the preform, the laying surface (28), and the peripheral part (28), said suction means being arranged in the area of the first and second zones of the flank.

7. Tool according to claim 6, **characterized in that** it comprises a bladder (34) which covers the preform (12) and the peripheral part (28) and which is connected outside the peripheral part (28) to the tool by sealing means (36).

8. Tool according to claim 6, **characterized in that** it comprises a sealing joint (38) sandwiched between the wing (30) and the peripheral edge of the upper surface (22).
